# EUROPÄISCHE PATENTSCHRIFT

(11) **EP 2 989 873 B1**
(45) Veröffentlichungstag und Bekanntmachung des Hinweises auf die Patenterteilung: **21.03.2018**
(21) Anmeldenummer: 15401087.0
(22) Anmeldetag: 20.08.2015
(51) Int. Cl.: A01B 37/00

(54) **GEFEDERTER SPURLOCKERER FÜR LANDWIRTSCHAFTLICHE MASCHINEN**
SPRING-LOADED TRACK LOOSENER FOR AGRICULTURAL MACHINES
EFFACEUR DE TRACES DE ROUE A RESSORT POUR MACHINES AGRICOLES

(30) Priorität: 26.08.2014 DE 102014112158
(43) Veröffentlichungstag der Anmeldung: 02.03.2016
(73) Patentinhaber: Amazonen-Werke H. Dreyer GmbH & Co. KG, 49205 Hasbergen (DE)
(72) Erfinder: Helms, Helge, 26125 Oldenburg (DE)

(56) Entgegenhaltungen:
- EP-A1- 0 167 640
- EP-A1- 2 389 796
- DE-A1-102008 039 998
- DE-U1- 7 826 426

## Beschreibung

Die Erfindung betrifft einen gefederten Spurlockerer für landwirtschaftliche Maschinen gemäß des Oberbegriffes des Patentanspruches 1.

Ein derartiger gefederter Spurlockerer für landwirtschaftliche Maschinen ist in der DE 10 2008 039 998 A1 beschrieben. Dieser gefederte Spurlockerer ist mittels eines eine quer zur Fahrtrichtung verlaufenden Gelenkachse aufweisenden Spurlockerergelenkes an einem Halter angeordnet und weicht bei einem Auftreffen auf ein Hindernis um die Gelenkachse nach hinten und oben gegen die Kraft einer zwischen dem Halter und dem Spurlockerer angeordneten Zugfeder aus. Die Gelenkachse des Spurlockerergelenkes befindet sich im vorderen Bereich des Halters und vorzugsweise vor dem unteren Ende des Spurlockerers. Hinter dem Spurlockerergelenk und beabstandet zu diesem ist mittels eines Gelenkes eine Schubstange an dem Spurlockerer angelenkt. An dem oberen Ende der Schubstange greift das eine Ende der Zugfeder an. Die Schubstange ist in ihrem oberen Bereich über zumindest ein Führungselement mit dem Halter in verschiebbarer Weise verbunden. Des Weiteren ist der Halter des Spurlockerers an dem Rahmen der landwirtschaftlichen Maschine befestigt.

Durch die bekannte Anordnung der Feder an des mit einer geradlinigen Schiebeführung am Halter angeordneten oberen Führungselementes für die Zugfeder ergibt sich ein progressiv ansteigender wirksamer Federkraftverlauf mit einer geringen Auslösekraft bei dem Ausweichen des Spurlockerers nach hintenoben beim Auftreffen auf ein im Boden festsitzendes Hindernis. Somit steigt in unerwünschter Weise die wirksame Kraft bei stetigem Ausweichen des Spurlockeres in nachteiliger Weise an der Spurlockererspitze immer weiter an.

Der Erfindung liegt die Aufgabe zugrunde, einen gefederten Spurlockerer mit einer hohen Auslösekraft und einem anschließend zumindest annähernd gleichbleibenden und an einem zumindest annähernden linearen Kraftverlauf an der Spurlockererspitze zu schaffen.

Diese Aufgabe wird erfindungsgemäß dadurch gelöst, dass das Führungselement als Gelenkhebel, der einerseits mit dem oberen Ende der Schubstange und andererseits mit dem Halter jeweils über ein Schubstangengelenk verbunden ist, ausgebildet ist.

Infolge dieser Maßnahme wird durch die erfindungsgemäße Umlenkkinematik eine hohe Anfangsauslösekraft mit einer gleichmäßig flachen Kraft- / Aushubweg - Kennlinie erreicht. Es wird zumindest annähernd der angestrebte Optimalfall mit einer definierten Auslösekraft zum Ausweichen der Zinkenspitze des Spurlockerers, wobei die an der Zinkenspitze wirksame Kraft beim weiteren Ausweichen des Spurlockerers kaum zunimmt. Durch annähernd gleichbleibende bzw. kaum ansteigende wirksame Zinkenkraft, die von der Feder aufgrund der erfindungsgemäßen Anlenkung erzeugt wird, wird die Belastung während des Ausweichvorgangs im Überlastfall im Halter und in den Bauteilen des Spurlockeres möglichst gering gehalten. Somit können erfindungsgemäß ausgestaltete Spurlockerer schwächer als bekannte dimensioniert werden.

Eine einfache erfindungsgemäße Ausgestaltung der Anlenkung des Gelenkhebels wird dadurch erreicht, dass mittels eines der Gelenke (15) das vordere Ende des Gelenkhebels (13) an dem oberen Ende der Schubstange (9) mittels eines als Schubstangengelenkes ausgebildeten Gelenkes (11) das hintere Ende des Gelenkhebels (13) an dem Halter (3) angelenkt ist.

Um in einfacher Weise den gewünschten erfindungsgemäßen Kraftverlauf beim Ausweichen des Spurlockerers zu erreichen, ist vorgesehen, dass die Zugfeder im Bereich des Spurlockerergelenkes an dem Halter und in Fahrtrichtung beabstandet zu dem Schubstangengelenk an dem Spurlockerer angeordnet ist, angeordnet ist.

In einfacher Weise wird die erfindungsgemäße Anordnung von Schubstange und Gelenkhebel dadurch erreicht, dass das Gelenk, mittels welchem die Schubstange mit dem Gelenkhebel verbunden ist, in Fahrtrichtung gesehen vor dem Schubstangengelenk sich befindet.

In einer bevorzugten Weiterbildung des erfindungsgemäßen Spurlockerers ist vorgesehen, dass die Lage des Spurlockerergelenkes, des Schubstangegelenkes und der Gelenke, mit dem der Gelenkhebel der Schubstange und dem Halter verbunden sind, so zueinander liegen sowie der Abstand der Gelenke zueinander eine derartige Länge aufweisen, dass die Lage des Spurlockerergelenkes, des Schubstangegelenkes und der Gelenke, mit dem der Gelenkhebel der Schubstange und dem Halter verbunden sind, so zueinander liegen sowie der Abstand der Gelenke zueinander eine derartige Länge aufweisen, dass die Hebelarme bzw. Wirkabstände der Kraftwirklinien während des Ausweich-und/oder Aushubvorganges im Überlastfall so ausgelegt sind, dass die an der Zinken- und/oder Werkzeugspitze angreifende Kraft (Fz) eine nahezu konstante Größe aufweist.

Hierbei kann die von der Zugfeder erzeugte Widerstandskraft an dem unteren Ende der Spurlockerer bei Auslenkung des Spurlockerers entgegen der Fahrtrichtung derart ausgelegt sein, dass sich zumindest kein wesentlich progressiver Federkraftverlauf bei sich vergrößernder Auslenkung ergibt.

Durch die spezielle Positionierung der Gelenkpunkte zueinander, werden die Hebelarme bzw. Wirkabstände der Kraftwirklinien während des Ausweich-und/oder Aushubvorganges im Überlastfall so angepasst, dass die an der Zinkenspitze angreifende Kraft eine nahezu konstante Größe aufweist, das bedeutet, mit Hilfe der Kinematik wird die natürliche Eigenschaft der Feder, (je großer die Dehnung desto größer die Kraft) zu einer nahezu konstanten Kraft an der Zinkenspitze, bezogen auf den gesamten Aushubweg, umgewandelt.
Die Überlastsicherung hat somit eine klar definierte Überlastgröße, die im Überlastfall während des gesamten Ausweichweges nicht überschritten wird. Eine konstante Kraft während des Überlastvorganges ist z.B. für die Auslegung von Haltern und Adaptern der Maschine von Vorteil.

Weitere Einzelheiten der Erfindung sind der Beispielsbeschreibung und den Zeichnungen zu entnehmen. Die Zeichnungen zeigen
- Fig.1: einen erfindungsgemäß ausgestalteten gefederten Spurlockerer in Arbeitsstellung perspektivischer Darstellung,
- Fig.2: den Spurlockerer in Seitenansicht,
- Fig.3: den Spurlockerer in ausgelenkter Stellung in Seitenansicht,
- Fig.4: den Spurlockerer in der weitmöglichsten ausgelenkten Stellung in Seitenansicht und
- Fig.5: das Spurlockerkraft- / Aushubweg - Diagramm für einen Spurlockerer nach dem Stand der Technik und der Erfindung.

Der gefederte Spurlockerer 1 ist an einen nicht dargestellten Rahmen eines Bodenbearbeitungsgerätes oder einer Sämaschine angeordnet. Der Spurlockerer 1 ist über ein Gelenk 2 an dem Halter 3 angeordnet. Der Halter 3 ist über eine Halterung 4 an dem nicht dargestellten Rahmen befestigt ist. Das Gelenk 2 weist eine quer zur Fahrtrichtung 5 verlaufende Gelenkachse 6 auf. Die Gelenkachse 6 des Gelenkes 2 befindet sich im vorderen Bereich des Halters 3 und vor dem unteren Ende 7 der Spurlockerers 1. Hinter dem Spurlockerergelenk 2 und beabstandet zu diesem Gelenk 2 ist mittels eines weiteren Gelenkes 8 eine nach oben tragende Schubstange 9 angelenkt. Das obere Ende 10 der Schubstange 9 ist mittels eines Schubstangengelenkes 11 an dem einen Ende 12 eines als Führungselement ausgebildeten Gelenkhebels 13 angelenkt. Das andere Ende 14 des Gelenkhebels 13 ist mittels eines weiteren Gelenkes 15 an dem Halter 3 angelenkt.

Zwischen dem Schubstangengelenk 11, welches zwischen der Schubstange 9 und dem Gelenkhebel 11 angeordnet ist, und dem vorderen oberen Bereich 16 des Halters 3 des Spurlockerers 1 ist eine Zugfeder 17 angeordnet. Die Zugfeder 17 ist an dem Halter 3 und in Fahrtrichtung 5 beabstandet zu den Gelenken 2 und 8 an dem Spurlockerer 1 angeordnet. Das Gelenk 11, mittels welchem die Schubstange 9 mit dem Gelenkhebel 13 verbunden ist, befindet sich in Fahrtrichtung gesehen vor dem Schubstangengelenk 8.

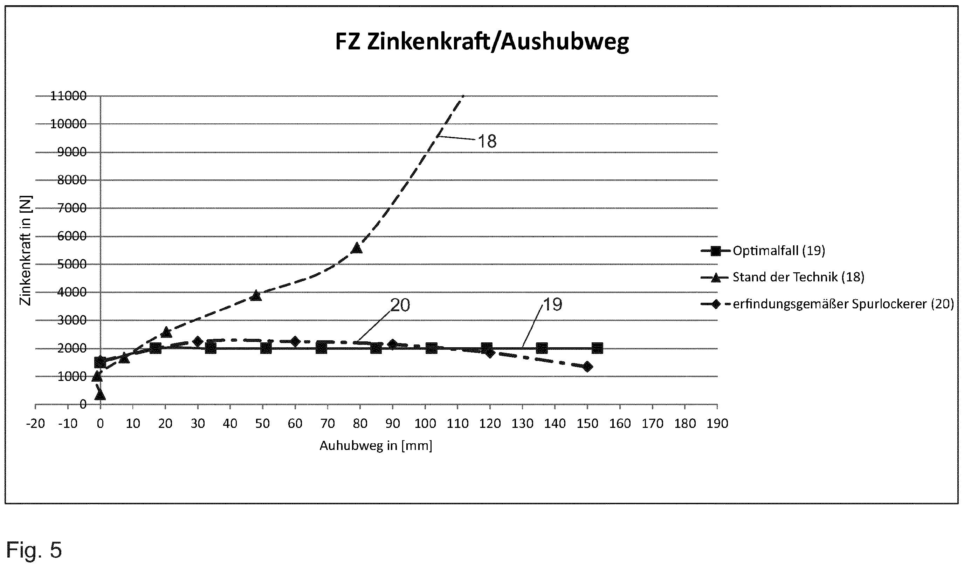

Die Lage des Spurlockerergelenkes 2, des Schubstangegelenkes 8 und der Gelenke 11 und 15, mit dem der Gelenkhebel 13 mit der Schubstange 9 und dem Halter 3 verbunden sind, liegen so zueinander sowie der Abstand der Gelenke 2, 8, 11 und weisen zueinander eine derartige Länge auf, dass die Hebelarme bzw. Wirkabstände der Kraftwirklinien während des Ausweich- und/oder Aushubvorganges des Spuerlockerers 1 im Überlastfall so ausgelegt sind, dass die an der Zinken- und/oder Werkzeugspitze 7 angreifende Kraft eine nahezu konstante Größe aufweist, wie noch anhand des Diagrammes nach Fig.5 erläutert wird.

Hierbei liegen die Lage des Spurlockerergelenkes 2, des Schubstangengelenkes 8 und der Gelenke 11 und 15, mit dem der Gelenkhebel 13 der Schubstange 9 und dem Halter 3 verbunden sind, so zueinander sowie der Abstand der Gelenke 2, 8, 11 und 15 weisen zueinander eine derartige Länge auf, dass die von der Zugfeder 17 erzeugte Widerstandskraft an dem unteren Ende 7 des Spurlockerers 1 bei Auslenkung des Spurlockerers 1 entgegen der Fahrtrichtung 5 sich zumindest kein wesentlich progressiver Federkraftverlauf bei sich vergrößernder Auslenkung des Spurlockerers 1 ergibt, wie Fig.5 zeigt.

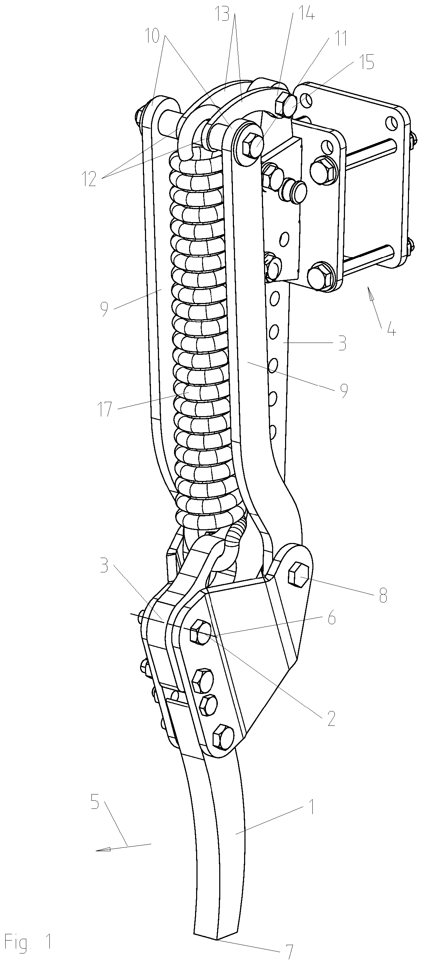

Das Diagramm in Fig.5 zeigt drei verschiedene Kraftverläufe 18, 19 und 20, wobei die jeweils wirksamen Zinkenkräfte an der Zinkenspitze 7 der Spurlockerers1 über den Aushubweg der Zinkenspitze 7 dargestellt sind. Der Kraftverlauf 18 entspricht exemplarisch dem Stand der Technik. Der Kraftverlauf 19 stellt den gewünschten optimalen Kraftverlauf im Optimalfall dar. Der Kraftverlauf 20 wird durch die erfindungsgemäße Ausgestaltung gemäß dem Ausführungsbeispiel nach den Fig. 1 bis 4 erreicht.

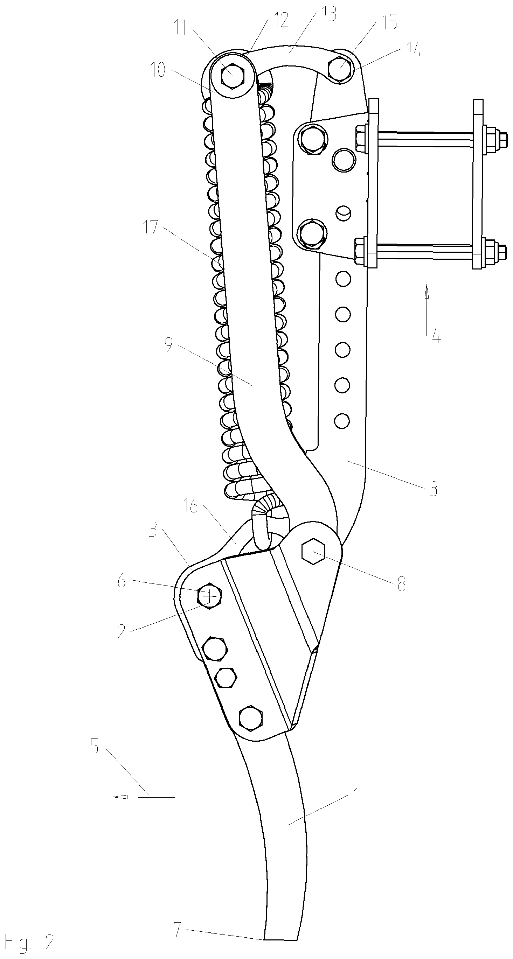

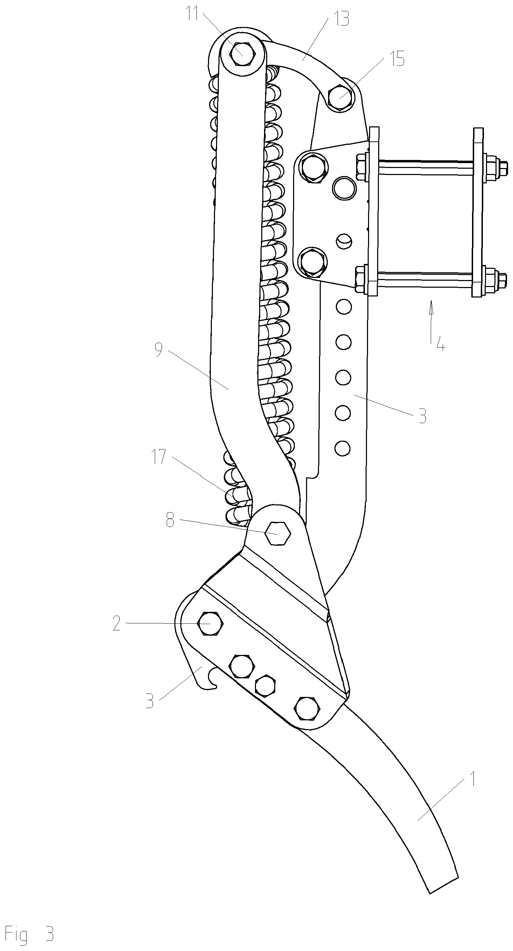

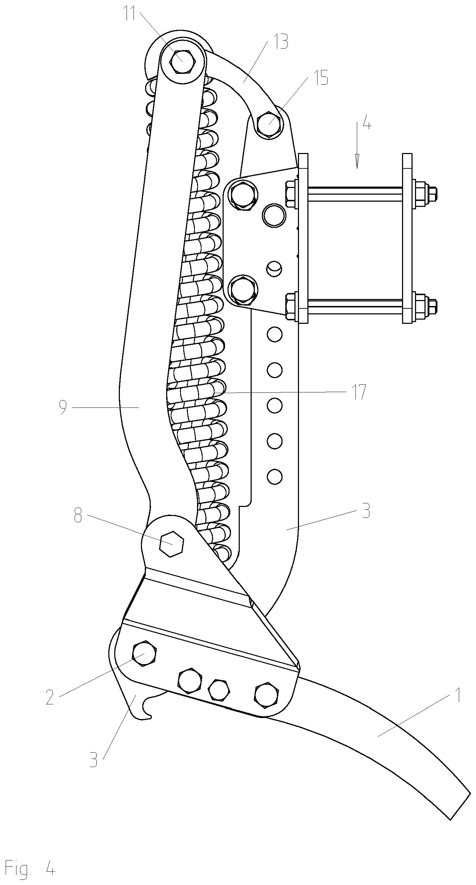

Das Auslenken der Zinkenspitze 7 des Spurlockerers 1 aus der in den Fig.1 und 2 dargestellten Ausgangsstellung weicht die Zinkenspitze 7 des Spurlockerers 1 über die Zwischenstellung in Fig. 3 bis in die Entstellung gemäß Fig. 4, wenn das Hindernis entsprechend groß ist, aus. Hierdurch ergibt sich der in Fig.5 dargestellte Kraftverlauf 20, der dem angestrebten Optimum 19 zumindest annähernd entspricht.

Durch die spezielle Positionierung der Gelenkpunkte 2, 8,11 und 15 zueinander, wie in den Fig. 1-4 dargestellt ist, werden die Hebelarme bzw. Wirkabstände der Kraftlinien während des Ausweichvorganges der Zinkenspitze 7 des Spurlockerers 1 im Überlastfall automatisch so geändert, dass die an der Zinkenspitze 7 angreifende Kraft eine nahezu konstante Größe aufweist, wie dies in Fig.5 dargestellt ist. Dies bedeutet, mithilfe der erfindungsgemäßen Kinemathek, wie sie erfindungsgemäß umgesetzt und beansprucht ist, wird die natürliche Eigenschaft der Feder, je größer die Dehnung desto größer die Kraft, zu einer nahezu konstanten Kraft an der Zinkenspitze 7, bezogen auf den gesamten Aushubweg, umgewandelt, wie dies mit der Kurve 20 in dem Diagramm in Fig.5 dargestellt ist. Somit hat die Überlastsicherung eine klar definierte Überlastgröße, die im Überlastfall während des gesamten ausweicht Weges nicht überschritten wird.

## Patentansprüche

1. Gefederter Spurlockerer (1) für landwirtschaftliche Maschinen, der mittels eines eine quer zur Fahrtrichtung (5) verlaufende Gelenkachse (6) aufweisenden Spurlockerergelenkes (2) an einem Halter (3) angeordnet ist und bei einem Auftreffen der unteren Zinken- und/oder Wirkspitze des Spurlockerers (1) auf ein Hindernis um die Gelenkachse (6) nach hinten und oben gegen die Kraft einer zwischen dem Halter (3) und dem Spurlockerer (1) angeordneten Zugfeder (17) ausweicht, wobei die Gelenkachse (6) des Spurlockerergelenkes (2) sich im vorderen Bereich des Halters (3) und vorzugsweise vor dem unteren Ende der Spurlockerer (1) befindet, wobei hinter dem Spurlockerergelenk (2) und beabstandet zu diesem mittels eines Gelenkes (8) eine Schubstange (9) an dem Spurlockerer (1) angelenkt ist, wobei an dem oberen Ende (10) der Schubstange (9) das eine Ende der Zugfeder (17) angreift, wobei die Schubstange (9) in ihrem oberen Bereich über zumindest ein Führungselement (13) mit dem Halter (3) in verschiebbarer Weise verbunden ist, **dadurch gekennzeichnet, dass** das Führungselement als Gelenkhebel (13), der einerseits mit dem oberen Ende der Schubstange (9) und andererseits mit dem Halter (3) jeweils über ein Gelenk (11,15) verbunden ist, ausgebildet ist.

2. Spurlockerer nach Anspruch 1, **dadurch gekennzeichnet, dass** mittels eines der Gelenke (15) das vordere Ende des Gelenkhebels (13) an dem oberen Ende der Schubstange (9) mittels eines als Schubstangengelenkes ausgebildeten Gelenkes (11) das hintere Ende des Gelenkhebels (13) an dem Halter (3) angelenkt ist.

3. Spurlockerer nach zumindest einem der vorstehenden Ansprüche, **dadurch gekennzeichnet, dass** die Zugfeder (17) im Bereich des Spurlockerergelenkes (2) an dem Halter (3) und in Fahrtrichtung (5) beabstandet zu dem Schubstangengelenk (8) an dem Spurlockerer (1) angeordnet ist, angeordnet ist.

4. Spurlockerer nach zumindest einem der vorstehenden Ansprüche, **dadurch gekennzeichnet, dass** das Gelenk (11), mittels welchem die Schubstange (9) mit dem Gelenkhebel (13) verbunden ist, in Fahrtrichtung (5) gesehen vordem Schubstangengelenk (8) sich befindet.

5. Spurlockerer nach zumindest einem der vorstehenden Ansprüche, **dadurch gekennzeichnet, dass** die Lage des Spurlockerergelenkes (2), des Schubstangegelenkes (8) und der Gelenke (11,15), mit dem der Gelenkhebel (13) der Schubstange (9) und dem Halter (3) verbunden sind, so zueinander liegen sowie der Abstand der Gelenke (2,8, 11,15) zueinander eine derartige Länge aufweisen, dass die Hebelarme bzw. Wirkabstände der Kraftwirklinien während des Ausweich- und/oder Aushubvorganges im Überlastfall so ausgelegt sind, dass die an der Zinken- und/oder Werkzeugspitze (7) angreifende Kraft eine nahezu konstante Größe aufweist.

## Claims

1. Spring-loaded track loosener (1) for agricultural machines, which is arranged on a holder (3) by means of a track loosener joint (2) having an axis of articulation (6) running transversely with respect to the direction of travel (5) and which, when the lower tine tip and/or action tip of the track loosener (1) strikes against an obstacle, yields rearwards and upwards about the axis of articulation (6) counter to the force of a tension spring (17) arranged between the holder (3) and the track loosener (1), wherein the axis of articulation (6) of the track loosener joint (2) is located in the front region of the holder (3) and preferably in front of the lower end of the track loosener (1), wherein, behind the track loosener joint (2) and at a distance therefrom, a push rod (9) is coupled to the track loosener (1) by means of a joint (8), wherein the one end of the tension spring (17) acts on the upper end (10) of the push rod (9), wherein the push rod (9) is connected in a displaceable manner in its upper region to the holder (3) via at least one guide element (13), **characterized in that** the guide element is designed as an articulated lever (13) which is connected at one end to the upper end of the push rod (9) and at the other end to the holder (3), in each case via a joint (11, 15).

2. Track loosener according to Claim 1, **characterized in that** the front end of the articulated lever (13) is coupled to the upper end of the push rod (9) by means of one of the joints (15), the rear end of the articulated lever (13) is coupled to the holder (3) by means of a joint (11) designed in the form of a push rod joint.

3. Track loosener according to at least either of the preceding claims, **characterized in that** the tension spring (17) is arranged is arranged on the holder (3) in the region of the track loosener joint (2) and on the track loosener (1) at a distance from the push rod joint (8) in the direction of travel (5).

4. Track loosener according to at least one of the preceding claims, **characterized in that** the joint (11) by means of which the push rod (9) is connected to the articulated lever (13) is located in front of the push rod joint (8), as seen in the direction of travel (5).

5. Track loosener according to at least one of the preceding claims, **characterized in that** the position of the track loosener joint (2), of the push rod joint (8) and of the joints (11, 15) with which the articulated lever (13) are connected to the push rod (9) and to the holder (3) lie with respect to one another in such a manner, and the distance of the joints (2, 8, 11, 15) from one another have such a length, that the lever arms or effective distances of the force action lines in the event of an overload during the yielding and/or lifting operation are configured in such a manner that the force acting on the tine tip and/or tool tip (7) has a virtually constant size.

## Revendications

1. Effaceur de traces de roues (1) à ressort pour machines agricoles, qui est disposé sur un support (3) au moyen d'une articulation d'effaceur de traces de roues (2) présentant un axe d'articulation (6) s'étendant transversalement à la direction de conduite (5), et qui, lorsque les pointes des dents et/ou les pointes fonctionnelles inférieures de l'effaceur de traces de roues (1) rencontrent un obstacle, s'écarte autour de l'axe d'articulation (6) vers l'arrière et vers le haut à l'encontre de la force d'un ressort de traction (17) disposé entre le support (3) et l'effaceur de traces de roues (1), l'axe d'articulation (6) de l'articulation d'effaceur de traces de roues (2) se trouvant dans la région avant du support (3) et de préférence avant l'extrémité inférieure de l'effaceur de traces de roues (1), une tige de poussée (9) étant articulée à l'effaceur de traces de roues (1) au moyen d'une articulation (8) derrière l'articulation de l'effaceur de traces de roue (2) et à distance de celle-ci, l'une des extrémités du ressort de traction (17) s'engageant avec l'extrémité supérieure (10) de la tige de poussée (9), la tige de poussée (9) étant connectée dans sa région supérieure au support (3) de manière déplaçable par le biais d'au moins un élément de guidage (13), **caractérisé en ce que** l'élément de guidage est réalisé sous forme de levier articulé (13) qui est connecté d'une part à l'extrémité supérieure de la tige de poussée (9) et d'autre part au support (3) à chaque fois par le biais d'une articulation (11, 15).

2. Effaceur de traces de roues selon la revendication 1, **caractérisé en ce qu'**au moyen de l'une des articulations (15), l'extrémité avant du levier articulé (13) est articulée à l'extrémité supérieure de la tige de poussée (9) au moyen d'une articulation (11) réalisée sous forme d'articulation de tige de poussée, l'extrémité arrière du levier articulé (13) est articulée au support (3).

3. Effaceur de traces de roues selon au moins l'une quelconque des revendications précédentes, **caractérisé en ce que** le ressort de traction (17) est disposé est disposé dans la région de l'articulation de l'effaceur de traces de roues (2) sur le support (3) et dans la direction de conduite (5) à distance de l'articulation de tige de poussée (8) au niveau de l'effaceur de traces de roues (1).

4. Effaceur de traces de roues selon au moins l'une quelconque des revendications précédentes, **caractérisé en ce que** l'articulation (11) au moyen de laquelle la tige de poussée (9) est connectée au levier articulé (13) se trouve, vu dans la direction de conduite (5), avant l'articulation de tige de poussée (8).

5. Effaceur de traces de roues selon au moins l'une quelconque des revendications précédentes, **caractérisé en ce que** les positions de l'articulation de l'effaceur de traces de roues (2), de l'articulation de tige de poussée (8) et des articulations (11, 15) au moyen duquel le levier articulé (13) sont connectés à la tige de poussée (9) et au support (3), sont disposées les unes par rapport aux autres de manière telle, et la distance entre les articulations (2, 8, 11, 15) présentent une longueur telle, que les bras de levier ou les distances fonctionnelles des lignes d'action de force pendant l'opération d'écartement et/ou de soulèvement en cas de surcharge soit conçus de manière à ce que la force s'exerçant au niveau des pointes des dents et/ou des pointes d'outil (7) présente une ampleur pratiquement constante.
